# EUROPÄISCHE PATENTANMELDUNG

(11) **EP 4 843 469 A1**
(43) Veröffentlichungstag der Anmeldung: **25.11.2026**
(21) Anmeldenummer: 26177538.1
(22) Anmeldetag: 08.05.2026
(51) Int. Cl.: A47L 9/20, A47L 5/36, A47L 9/00

(54) **STAUBSAUGVORRICHTUNG MIT EPDM ABREINIGUNGSVENTIL**

(30) Priorität: 21.05.2025 EP 25177997
(71) Anmelder: Hilti Corporation, 9494 Schaan (LI)
(72) Erfinder: Podhorny, Roman, 86807 Buchloe (DE)
(74) Vertreter: Hilti Aktiengesellschaft Corporate Intellectual Property

(57) **Zusammenfassung**

Die vorliegende Erfindung betrifft eine Staubsaugvorrichtung (100), insbesondere Bausauger oder Luftreinigungsvorrichtung, wobei die Staubsaugvorrichtung (100) folgendes aufweist:
- ein Saugaggregat (102) zum Erzeugen eines Saugstroms;
- einen Filter (104), welcher derart angeordnet ist, dass der Filter (104) während des Betriebs vom Saugstrom in einer ersten Richtung durchströmt wird und dazu ausgebildet ist, Staub oder andere Verunreinigungen zumindest teilweise vom Saugstrom abzuscheiden;
- eine Abreinigungsvorrichtung zum Abreinigen des Filters (104), wobei die Abreinigungsvorrichtung ein Ventil (106) aufweist, welches zwischen einer Offenstellung, in welcher Umgebungsluft während des Betriebs den Filter (104) in einer zweiten Richtung, welche der ersten Richtung im Wesentlichen entgegengesetzt ist, durchströmt, und einer Schließstellung, überführbar ist, und wobei das Ventil (106) ein Dichtelement (110) aufweist, welches in der Schließstellung mit einem Ventilsitz in Kontakt steht,
wobei das Dichtelement (110) einen schaumförmigen, insbesondere geschlossenporigen, Elastomer, aufweist.

## Beschreibung

Die vorliegende Erfindung betrifft eine Staubsaugvorrichtung, insbesondere Bausauger oder Luftreinigungsvorrichtung.

### Hintergrund der Erfindung

In der Industrie oder im Baugewerbe ist es bekannt, Staubsaugvorrichtungen zur Beseitigung von Stäuben oder Verunreinigungen zu verwenden. Eine Untergruppe dieser Staubsaugvorrichtungen wird bevorzugt auch als Entstauber bezeichnet. Bei industriell verwendeten Staubsaugvorrichtungen oder Entstaubern ist es vor allem im Zusammenhang mit Beton-Staub vorteilhaft, den eingesetzten Filter in regelmäßigen Abständen automatisch oder halb-automatisch abzureinigen, um ein effizientes Einsaugen von Staub und Verunreinigungen gewährleisten zu können. Im Stand der Technik sind insbesondere zwei unterschiedliche Ansätze bekannt, um eine Abreinigung eines Filters einer Staubsaugvorrichtungen zu erreichen. Zum einen sind im Stand der Technik solche Systeme bekannt, die auf Vibration basieren, bei denen am Filter anhaftender Staub oder Filterkuchen durch Vibrationen vom Filter gelöst werden sollen. Zum anderen gibt es Staubsaugvorrichtungen, die auf einer Umkehrung des Saugluftroms durch den Filter basieren.

Vibrationsbasierte Systeme haben den wesentlichen Nachteil, dass während der Abreinigungszeit der Filter nicht mehr im Luftstrom steht, da in diesem Fall der abzureinigende Feinstaub in den Filter hineingezogen würde, anstatt vom Filter losgeschüttelt zu werden. Dies führt dazu, dass die Filter in vibrationsbasierten Systemen entweder nur in Arbeitspausen abgereinigt werden können oder dass ein zweiter Filter oder eine zweite Filterkammer vorgesehen sein müssen, um eine Filterabreinigung im laufenden Betrieb der Staubsaugvorrichtung zu ermöglichen. Die Vorsehung eines zweiten Filters oder einer zweiten Filterkammer führt aber regelmäßig zu einem erheblich erhöhten Bauraum, sowie hohen Herstellungs-, Produktions- und Transportkosten in Zusammen-hang mit solchen Staubsaugern. Wenn der Staubsauger nur in den Arbeitspausen abgereinigt werden kann, kann sich dies nachteilig auf die Saugleistung der Staubsaugvorrichtung auswirken. Dies ist vor allem bei sicherheitsrelevanten Bohrungen unerwünscht, wenn beispielsweise eine bestimmte Mindest-Saugleistung erforderlich oder vorgeschrieben ist, um ein Bohrloch zu reinigen. Darüber hinaus kann es bei langen Intervallen zwischen zwei Abreinigungsvorgängen dazu kommen, dass der Filter verstopft. Dies kann eine sehr zeitaufwändige, manuelle Filterreinigung oder den Austausch bzw. die Ersetzung des verstopften Filters erforderlich machen.

Systeme, die auf einer Luftstromumkehrung/Rückspülung basieren, weisen in der Regel eine größtmögliche Öffnung des Staubsaugers auf, durch die Umgebungsluft in das Innere des Staubsaugers gelangen kann. Darüber hinaus haben solche luftstromumkehrbasierten Systeme üblicherweise ein Schließventil, dass die Öffnung gegenüber einer Umgebung des Staubsaugers bzw. gegenüber einer Umgebungsluft mit Atmosphärendruck verschließt. Durch die Umgebungsöffnung des Staubsaugers kann bei Öffnung des Ventils Umgebungsluft in das Innere des Staubsaugers gelangen, dabei den abzureinigenden Filter durchströmen und anhaftenden Staub und Filterkuchen lösen. Das Eindringen der Umgebungsluft wird dabei von dem Unterdruck unterstützt, der im Inneren des Staubsaugers vorliegt, um den Saugbetrieb der Staubsaugvorrichtung zu gewährleisten. Der Abreinigungsluftstrom ist dabei dem Luftstrom im Saugbetrieb des Staubsaugers entgegengerichtet; er fließt insbesondere von der staubabgewandten Seite durch den Filter und reinigt den anhaftenden Staub auf der dem Staubsammelbehälter zugewandten Seite vom Filter ab.

Ein wichtiger Bestandteil einer effizienten und kostengünstigen Rückspülung ist die Ventiltechnik, die von einer hohen und kraftvollen Dynamik abhängt, um schnell den Filter zu reinigen und einen nahezu unterbrechungsfreien Saugstrom im Sauger zu ermöglichen. Bausauger mit Abklopf-Funktion weisen Ventilanordnungen auf, welche dazu ausgebildet sind in regelmäßigen Abständen Außenluft in das Innere des Sauger-Gehäuses strömen zu lassen. Um den Saugstrom möglichst kurz zu unterbrechen, öffnet und schließt dieses Ventil sehr schnell.

Das Ventil ist mit einer Dichtung versehen, welche eine Öffnung des Ventilsitzes sicher abdichtet, wenn das Ventil in seiner geschlossenen Stellung ist. Als Dichtungen werden üblicherweise 2K Spritzguss Materialien verwendet, z.B. "thermoplastische Vulkanisate" (TPV oder TPE-V). Diese sind sehr günstig und bieten gute Abdichtungseigenschaften. Insbesondere durch das schnelle Schließen des Ventils, stößt dieses jedoch mit hohen Geschwindigkeiten auf den Ventilsitz. Es kann deshalb zum Verformen der Dichtungen aufgrund des hohen Drucks über die Zeit bzw. aufgrund zu hoher Temperaturen kommen, was in der Folge zu Undichtigkeiten des Ventils in der Schließstellung führen kann.

Auf Grundlage der oben genannten Problemstellung ist es eine Aufgabe der vorliegenden Erfindung, eine neuartige Staubsaugvorrichtung anzugeben, welche eine wartungsarmen, vorzugsweise wartungslose, Filterabreinigung aufweist.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Dementsprechend betrifft die vorliegende Erfindung eine Staubsaugvorrichtung, insbesondere Bausauger oder Luftreinigungsvorrichtung, wobei die Staubsaugvorrichtung folgendes aufweist:
- ein Saugaggregat zum Erzeugen eines Saugstroms;
- einen Filter, welcher derart angeordnet ist, dass der Filter während des Betriebs vom Saugstrom in einer ersten Richtung durchströmt wird und dazu ausgebildet ist, Staub oder andere Verunreinigungen zumindest teilweise vom Saugstrom abzuscheiden;
- eine Abreinigungsvorrichtung zum Abreinigen des Filters, wobei die Abreinigungsvorrichtung ein Ventil aufweist, welches zwischen einer Offenstellung, in welcher Umgebungsluft während des Betriebs den Filter in einer zweiten Richtung, welche der ersten Richtung im Wesentlichen entgegengesetzt ist, durchströmt, und einer Schließstellung, überführbar ist, und wobei das Ventil ein Dichtelement aufweist, welches in der Schließstellung mit einem Ventilsitz in Kontakt steht,
wobei das Dichtelement einen schaumförmigen, insbesondere geschlossenporigen, Elastomer, aufweist.

Überraschend wurde festgestellt, dass Dichtelemente aus schaumförmigen, insbesondere geschlossenporigen, Elastomeren vor allem bei hohen Schließkräften/Geschwindigkeiten längere Standzeiten aufweisen als mit herkömmlichen 2K Spritzgussmaterialien, beispielsweise thermoplastische Vulkanisate. Zwar konnte durch die 2K Spritzgussmaterialien eine gute Abdichtung des Ventilsitzes erreicht werden, jedoch neigen diese zu schnellerer Ermüdung bzw. Verformung. Dies ist insbesondere deshalb problematisch, da die Staubsaugvorrichtung zum Ersetzen der Ventile zerlegt werden muss. Die Erfindungsgemäßen Dichtelemente aus schaumförmigen Elastomeren aben sich als im Wesentlichen wartungsfrei herausgestellt. Sie bieten eine gute Abdichtung des Ventilsitzes und widerstehen den Kräften der Schließbewegung ohne signifikante Abnutzung bzw. Verformung. Schaumförmigen Elastomere als Dichtelemente sind wesentlich kostspieliger als die bekannten 2K Spritzgussmaterialien. Es hat sich jedoch herausgestellt, dass durch die Langlebigkeit Wartungsintervalle stark verlängert werden können, was einerseits die Standzeiten der Staubsaugvorrichtung verlängert und andererseits die Wartung bzw. Reparaturkosten senkt. Auch werden hierdurch Abfälle vermieden, wodurch der Staubsauger der vorliegenden Erfindung nachhaltig ist.

Auch kann durch das Dichtelement der vorliegenden Erfindung gewährleistet werden, dass das Ventil in seiner Schließstellung die Öffnungen des Ventilsitzes zu jeder Zeit vollständig abgedichtet. Es kommt nicht zur vorzeitigen Verformung des Dichtelements, wodurch zunehmend Fremdluft (z.B. Außenluft) über die Ventilsitz eindringen könnte, auch wenn keine Rückspülung gewünscht ist. Dementsprechend wird durch das Dichtelement des erfindungsgemäßen Staubsaugers erreicht, dass dieser weniger Verluste aufweist und entsprechend effizienter betrieben werden kann. Beispielsweise kann es sich bei der Staubsaugvorrichtung um eine akkubetriebene Staubsaugvorrichtung handeln, wobei durch das Dichtelement längere Laufzeiten und ein geringerer Energiebedarf erzielt wird.

Gemäß einer weiteren Ausführungsform weist das Dichtelement Zellkautschuk, insbesondere Ethylen-Propylen-Dien-Kautschuk (EPDM) auf. Die Verwendung von Zellkautschuk hat den Vorteil, dass dieser vernetzt ist und daher noch resistenter gegen Druckverformung und Temperaturschwankungen ist.

Gemäß einer weiteren Ausführungsform weist das Dichtelement ein peroxidisch vernetztes EPDM auf. EPDM ist ein synthetischer Kautschuk mit vielseitigen Eigenschaften. EPDM zeichnet sich durch seine hohe Beständigkeit gegen Witterungseinflüsse, UV-Strahlung, Ozon, Säuren und Laugen aus und ist der Temperaturbeständig von etwa minus 50 °C bis plus 130 °C. Insbesondere peroxidisch vernetztes EPDM weist eine verbesserte Druckverformungsresistenz auf.

Gemäß einer weiteren Ausführungsform weist das Ventil einen Ventilkörper, insbesondere ringförmigen Ventilkörper, mit einer ersten Seite, welche dem Ventilsitz zugewandt ist, aufweist, und wobei das Dichtelement, insbesondere unlösbar, an der ersten Seite des Ventilkörpers angebracht ist. Beispielsweise kann das Dichtelement an der ersten Seite des Ventilkörpers angeklebt sein.

Gemäß einer weiteren Ausführungsform weist das Dichtelement eine erste Oberfläche, welche mit der ersten Seite des Ventilkörpers verbunden ist, und eine zweite Oberfläche, welche der ersten Oberfläche gegenüber liegt, auf, wobei die zweite Oberfläche im Wesentlichen eben ausgebildet ist.

Gemäß einer weiteren Ausführungsform ist das Dichtelement im Wesentlichen ringförmig ausgebildet.

Gemäß einer weiteren Ausführungsform weist das Dichtelement einen ersten Dichtring auf, welcher in einer Ebene mit einem zweiten Dichtring liegt, und wobei der erste Dichtring konzentrisch zum zweiten Dichtring angeordnet und über wenigstens einen Verbindungssteg mit dem zweiten Dichtring verbunden ist.

Zwischen den Verbindungsstegen können Langlöcher angeordnet sein, um das Dichtelement einerseits leichter auszugestalten und andererseits den Luftwiderstand beim Öffnen und Schließen des Ventils zu reduzieren. Hierdurch kann einerseits die Größe des Elektromagneten reduziert werden. Andererseits lassen sich schneller schnellere Öffnungs- bzw. Schließzeiten erreichen.

Gemäß einer weiteren Ausführungsform weist die Abreinigungsvorrichtung einen Aktuator, insbesondere einen Elektromagnet, auf, welcher dazu ausgebildet ist, das Ventil von seiner Schließstellung in seine Offenstellung zu überführen.

Durch den als Elektromagneten ausgebildeten Aktuator kann das Ventil schlagartig geöffnet werden, um den Rückspülvorgang einzuleiten. Dabei können durch Elektromagneten hohe Hubkräfte aufgewendet werden, welche der Sogwirkung des Saugstroms innerhalb des Saugkopfes entgegenstehen, um das Ventil vom Ventilsitz zu beabstanden.

Gemäß einer weiteren Ausführungsform ist das Ventil derart ausgebildet, dass das Ventil durch den Saugstrom aus der Offenstellung in seine Schließstellung zurückkehrt, wenn der Aktuator deaktiviert wird.

Mit anderen Worten kann das Ventil der vorliegenden Erfindung auch ohne weitere Rückstellelemente gegen den Ventilsitz vorgespannt sein. In einer alternativen Ausführungsform ist das Ventil zusätzlich über ein Vorspannelement, wie beispielsweise eine Spannfeder, in seiner Schließstellung vorgespannt.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Figur 1: eine schematische Darstellung einer Saugvorrichtung während des Saugbetriebs;
- Figur 2: eine schematische Darstellung der Saugvorrichtung aus Figur 1 während der Rückspülung;
- Figur 3: eine Schnittdarstellung eines Teilbereichs einer Staubsaugvorrichtung gemäß der vorliegenden Erfindung;
- Figur 4: eine perspektivische Ansicht eines Ventils der Staubsaugvorrichtung gemäß Figur 3;
- Figur 5: eine Schnittdarstellung durch das Ventil gemäß Figur 4 in seiner Schließstellung; und
- Figur 6: ein Querschnitt durch eine Explosionsdarstellung des Ventils gemäß Figur 4.

### Detaillierte Beschreibung

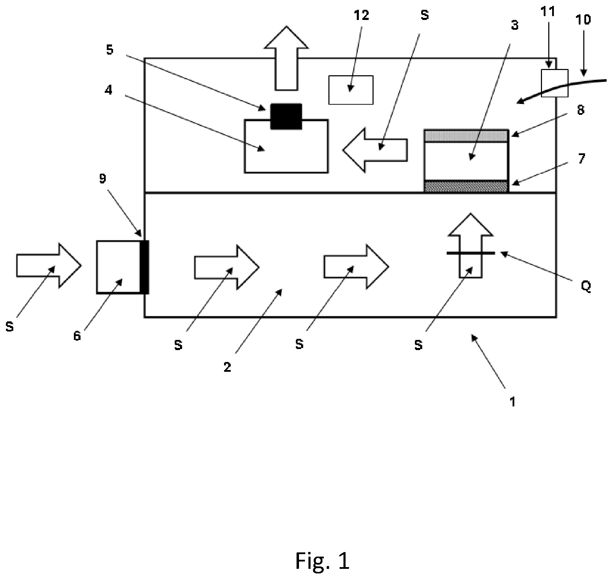

Figur 1 zeigt eine Ausgestaltung einer Saugvorrichtung 1 im Saugbetrieb. Die Saugvorrichtung 1 umfasst einen Schmutzsammelbehälter 2, einen Filter 3 und ein Saugaggregat 4. Das Saugaggregat 4 kann eine Turbine 5 umfassen, wobei die Turbine 5 von einem Motor angetrieben wird, so dass ein Saugstrom S erzeugt wird. Technisch gesehen arbeitet die Turbine 5 als Verdichter, wobei mit dem Verdichter Luft angesaugt werden kann, um den Saugstrom S zu erzeugen.

Der Saugstrom S wird zum Einsaugen von Staub, Schmutz oder einer flüssigen Mischung aus Wasser und Schmutz verwendet. Der Saugstrom S strömt innerhalb der Saugvorrichtung 1 in einem Strömungskanal oder Strömungspfand, der ebenfalls mit dem Bezugszeichen S bezeichnet wird. Die Saugvorrichtung 1 weist eine Einlassöffnung 9 auf, wobei sich vorzugsweise zwischen der Einlassöffnung 9 und dem Saugaggregat 4 bzw. der Turbine 5 der Saugstrom S bzw. der Strömungspfad S ausbildet. Die Einlassöffnung 9 liegt vorzugsweise in dem Schmutzsammelbehälter 2 der Saugvorrichtung 1 angeordnet vor.

Zwischen der Einlassöffnung 9 und dem Saugaggregat 4 ist ein Filter 3 angeordnet, der dazu eingerichtet ist, Schmutz und Staub aus dem Saugstrom S herauszufiltern, um eine Verunreinigung des Saugaggregats 4 zu verhindern. Der Filter 3 weist eine Schmutzseite 7 auf, die vorzugsweise dem Schmutzsammelbehälter 2 zugewandt ist, sowie eine Reinseite 8, die dem Saugaggregat 4 und dem Sauggerätkopf zugewandt ist.

Mit dem Begriff «Schmutzseite 7» wird im Sinne der Erfindung nicht nur die entsprechende Seite des Filters 3 bezeichnet, sondern vorzugsweise auch der Bereich des Strömungspfads S zwischen Filter 3 und Einlassöffnung 9. Die Formulierungen «auf der Schmutzseite» und «zwischen dem Filter 3 und der Einlassöffnung 9» sind im Sinne der Erfindung vorzugsweise synonym zu verstehen. Der Saugstrom S strömt während des Saugbetriebs der Saugvorrichtung 1 von der Schmutzseite 7 in Richtung der Reinseite 8 durch den Filter 3, wobei Staub und Schmutz bei Durchqueren des Filters 3 aus dem Saugstrom S herausgefiltert wird. Diese Richtung des Saugstroms S von der Schmutzseite 7 in Richtung der Reinseite 8 wird in Fig. 1 mit den Pfeilen dargestellt, die mit dem Bezugszeichen S markiert sind.

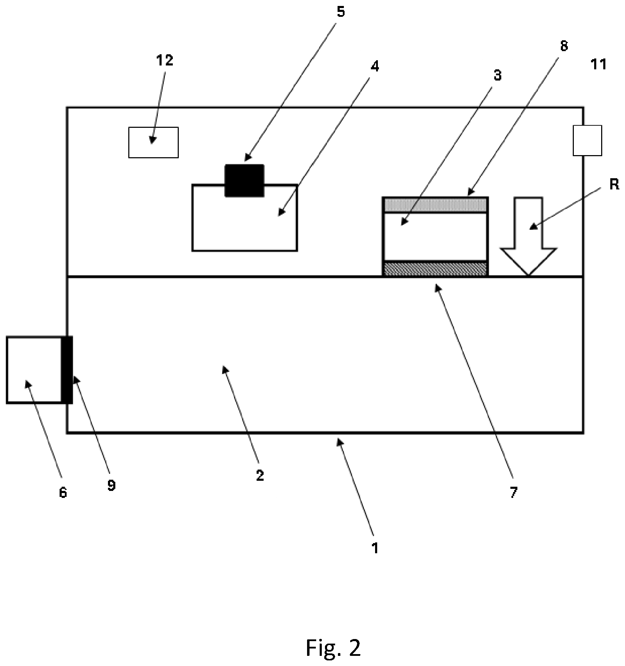

Der Filter 3 kann während des Betriebs der Saugvorrichtung 1 verstopfen oder sich mit einem Filterkuchen zusetzen, wodurch die Saugleistung der Saugvorrichtung 1 herabgesetzt werden kann. In diesem Fall ist es erforderlich, eine sog. Filterabreinigung, d.h. eine Reinigung des Filters 3 der Saugvorrichtung 1, durchzuführen. Diese Filterabreinigung wird im Kontext der vorliegenden Erfindung mit einer Rückspülung durchgeführt, d.h. einer kurzen Richtungsumkehr des Saugstroms S. Während dieser Rückspülung wird der Filter 3 mit einem Rückspülstrom R durchströmt bzw. durchspült, wobei der Rückspülstrom R von der Reinseite 8 des Filters 3 in Richtung seiner Schmutzseite 7 strömt. Die Rückspülstrom R wird in Fig. 2 dargestellt. Die Rückspülströmung R kann durch Öffnen einer weiteren Einlassöffnung 11 der Saugvorrichtung 1 erzeugt werden, wobei diese weitere Einlassöffnung 11 vorzugsweise im oberen Bereich der Saugvorrichtung 1 bzw. im Kopf der Saugvorrichtung 1 («Sauggerät-Kopf») angeordnet sein kann.

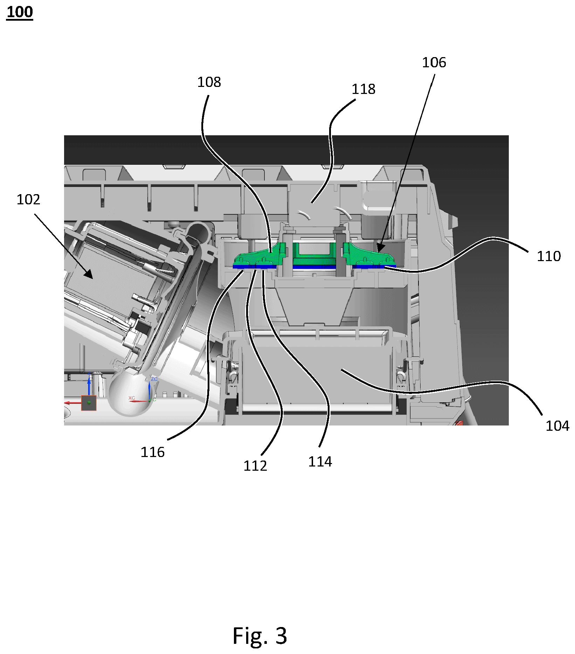

Die weitere Einlassöffnung 11 kann mit einer Ventilanordnung (Figuren 3 bis 6) geöffnet oder geschlossen werden. Durch die weitere Einlassöffnung 11 kann bei Öffnen des Ventils Umgebungsluft 10 in Die Saugvorrichtung 1 strömen und direkt oder indirekt auf den Filter 3 wirken.

Die Saugvorrichtung 1 kann ein Drosselventil 6 aufweisen, das vorzugsweise im Bereich der Einlassöffnung 9 im Schmutzsammelbehälter 2 der Saugvorrichtung 1 angeordnet vorliegt. Das Drosselventil 6 liegt insbesondere im Saugstrom S angeordnet vor. Mit dem Drosselventil 6 kann die mindestens eine Einlassöffnung 9 der Saugvorrichtung 1 ganz oder teilweise geöffnet oder geschlossen werden. Insbesondere kann die Einlassöffnung 9 der Saugvorrichtung 1 stufenlos geöffnet oder geschlossen werden, so dass der Saugstrom S durch das Drosselventil 6 vorzugsweise stufenlos eingestellt, insbesondere gedrosselt werden.

Figur 3 zeigt eine Teil-Schnittdarstellung einer Staubsaugvorrichtung 100 gemäß einer Ausführungsform der vorliegenden Erfindung. Der in Figur 3 dargestellte Ausschnitt zeigt insbesondere einen Saugkopf einer Staubsaugvorrichtung 100, wie beispielsweise eines Bausaugers. Die Staubsaugvorrichtung 100 weist ein Saugaggregat 102 auf. Das Saugaggregat 102 ist mit einem Motor ausgestattet, welcher dazu dient, eine Turbine zum Erzeugen eines Saugstroms anzutreiben. Im hier dargestellten Saugkopf ist ferner ein Luftkanal vorgesehen, welcher sich zwischen einem Filter 104 und dem Saugaggregat 102 erstreckt. Somit kann mit Hilfe des Saugaggregats 102 Luft durch den Filter in Form eines Saugstroms gesogen werden. Der Filter 104 ist derart angeordnet, dass der Filter 104 während des Betriebs vom Saugstrom in einer ersten Richtung (in Figur 3 von unten nach oben) durchströmt wird. Der Filter ist dazu ausgelegt, Staub oder andere Verunreinigungen vom Saugstrom abzuscheiden. Dementsprechend ist ein in Figur 3 nicht dargestellt Sammelbehälter unterhalb des Filters angeordnet. Die herausgefilterten Verunreinigungen (z.B. Baustaub) können nach unten in den Sammelbehälter herabfallen.

Durch das Herausfiltern der Verunreinigungen im Filter 104 kommt es zunehmend zu Staubablagerungen in den Poren des Filters 104, wodurch der Luftwiderstand des Filters erhöht und die Saugeffizienz der Staubsaugvorrichtung vermindert wird. Um ein Verstopfen des Filters durch Staub vorzubeugen, weist die Staubsaugvorrichtung 100 eine Abreinigungsvorrichtung zum Abreinigen des Filters 104 auf. Die Wirkungsweise der Abreinigungsvorrichtung ist im Wesentlichen identisch mit der Wirkungsweise der Vorrichtung wie sie in den Figuren 1 und 2 schematisch dargestellt wurde. Mit anderen Worten, die Abreinigungsvorrichtung der Staubsaugvorrichtung 100 gemäß Figur 3 basiert ebenfalls auf dem Prinzip der Rückspülung.

Die Abreinigungsvorrichtung gemäß Figur 3 weist ein Ventil 106 auf. Das Ventil 106 ist in Figur 3 in einer Schließstellung gezeigt. In der Schließstellung ist das Ventil 106 gegen einen Ventilsitz 112 vorgespannt. Es kann in dieser Schließstellung keine Umgebungsluft zum Filter 104 gelangen. In einer nicht dargestellten Offenstellung ist das Ventil 106 vom Ventilsitz 112 beabstandet. In der Ausführungsform gemäß Figur 3 kann das Ventil 106 dazu vertikal nach oben vom Ventilsitz 112 gehoben werden. Hierzu ist ein Aktuator, insbesondere ein Elektromagnet 118 vorgesehen. Im Einzelnen ist der Elektromagnet 118 in der in Figur 3 gezeigten Schließstellung nicht aktiv. Das Ventil 106 wird durch den im Saugkopf befindlichen Saugstrom gegen den Ventilsitz 112 gepresst. Insbesondere wird durch den Saugstrom ein Unterdruck im Saugkopf der Staubsaugvorrichtung erzeugt, welcher über Öffnungen 114, 116 am Ventilsitz 112 dazu dient, das Ventil 106 auf den Ventilsitz 112 zu ziehen.

Um das Ventil 106 anzugehen, d. h. vom Ventilsitz 112 zu beabstanden, wird der Elektromagnet 118 bestromt. Die Zugkraft des Elektromagneten 118 in vertikaler Richtung in Figur 3 dient dazu, das Ventil 106, entgegen der Sogwirkung des Saugstroms, vom Ventilsitz 112 abzuheben. In dieser geöffneten Stellung kann Umgebungsluft, d. h. Außenluft, von außerhalb des Saugkopfes in den Kanal zwischen Saugaggregat 102 und Filter 104 dringen. Mit anderen Worten, die Umgebungsluft kann über die Öffnungen 114, 116 des Ventilsitzes 112 zur Schmutzseite des Filters 104 gelangen. Die Öffnungen 114, 116 sind beispielsweise ringförmig ausgestaltet. Die Umgebungsluft durchdringt den Filter 104 von der Schmutzseite zur Reinseite und erzeugt somit einen Rückspülstrom (vgl. "R", Figur 2).

Während der Rückspülung, d. h. während der Abreinigung wird der Saugbetrieb der Staubsaugvorrichtung temporär unterbrochen. Dementsprechend soll die Rückspülung nur für möglichst kurze Zeit durchgeführt werden. Nach kurzer Abreinigung des Filters 104, wird das Ventil 106 der Abreinigungsvorrichtung wieder geschlossen. Hierzu wird der Elektromagnet 118 deaktiviert, sodass das Ventil 106 durch den vom Saugstrom verursachten Unterdruck wieder auf den Ventilsitz 112 gezogen wird. Ein Öffnen bzw. Schließen des Ventils 106 erfolgt typischerweise innerhalb weniger Millisekunden. Dementsprechend erfolgt die Bewegung des Ventils 106 mit sehr hohen Geschwindigkeiten/Beschleunigungen. Dabei trifft das Ventil 106, insbesondere beim Schließen, mit starken Kräften auf den Ventilsitz 112.

Das Ventil 106 weist ein Dichtelement 110 auf, welches in der Schließstellung mit dem Ventilsitz 112 in Kontakt steht. Das Dichtelement 110 dient dazu, dass Ventil 106 verlässlich gegenüber den Öffnungen 114, 116 des Ventilsitzes 112 abzudichten. Beim Schließen des Ventils wird vor allem das Dichtelement stark verformt. Hierdurch kann es bei der Verwendung typischer 2K Spritzgussmaterialien zum schnellen Verschleiß des Elements kommen. Dementsprechend ist es erfindungsgemäß vorgesehen, dass das Dichtelement 110 einen schaumförmigen, insbesondere geschlossenporigen Elastomer aufweist. Beispielsweise kann es sich bei dem Dichtelement 110 um ein Element aus Zellkautschuk, insbesondere Ethylen-Propyläen-Dien-Kautschuk (EPDM), handeln.

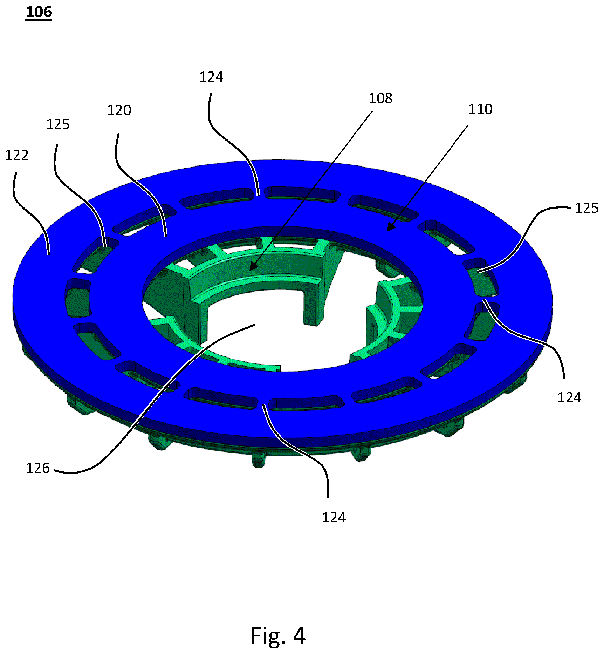

Die Figur 4 zeigt eine schematische, perspektivische Ansicht des Ventils 106. Das Ventil 106 weist einen Ventilkörper 108 auf, welcher mit dem Dichtelement 110 verbunden ist. Der Ventilkörper 108 kann beispielsweise ringförmig ausgebildet sein. Dabei weist der ringförmige Ventilkörper 108 eine zentrale Durchgangsöffnung 126 auf, welche beispielsweise für einen Magnetanker des Elektromagnet 118 vorgesehen ist. Der Magnetanker erstreckt sich wenigstens teilweise durch die Durchgangsöffnung 126 und dient der Führung des Ventils 106 bei seiner translatorischen (Hub-) Bewegung zwischen der Offenstellung und der Schließstellung.

Der Ventilsitz 106 weist eine erste Seite auf, welche im eingebauten Zustand (Figur 3) dem Ventilsitz 112 zugewandt ist. Das Dichtelement 110 ist an der ersten Seite des Ventilkörpers 106 angebracht. Beispielsweise kann das Dichtelement 110 unlösbar an der ersten Seite des Ventilkörpers 108 angeordnet sein (Verklebung, etc.). Auch das Dichtelement 110 kann ringförmig ausgebildet sein. Dabei ist zumindest eine dem Ventilkörper 106 abgewandelte Oberfläche des Dichtelements 110 im Wesentlichen ringförmig ausgebildet.

Das Dichtelement 110 weist einen ersten Dichtring 120 auf, welcher in einer Ebene mit einem zweiten Dichtring 122 angeordnet ist. Die ersten und zweiten Dichtringe 120, 122 sind konzentrisch angeordnet. Zwischen dem ersten Dichtring 120 und dem zweiten Dichtring 122 sind mehrere Verbindungsstege 124 angeordnet. Die Verbindungsstege 124 erstrecken sich in radialer Richtung zwischen dem ersten Dichtring 120 und dem zweiten Dichtring 122. Der zweite Dichtring 122 ist radial außerhalb des ersten Dichtrings 120 angeordnet. Zwischen den Verbindungsstegen 124 sind Langlöcher 125 angeordnet. Die Langlöcher 125 erstrecken sich beispielsweise in Umfangsrichtung zwischen den Verbindungssteg 124. Dabei ist je ein Langloch 125 zwischen benachbarten Verbindungsstegen 124 angeordnet.

Der Radius des ersten Dichtring 120 ist derart bemessen, dass dieser dem Radius der ersten ringförmigen Öffnung 114 entspricht. Der Radius der zweiten Dichtring 122 ist derart bemessen, dass dieser dem Radius der zweiten Öffnung 116 entspricht. Durch die Langlöcher 125 ist das Dichtelement 110 besonders leicht und weist einen geringeren Luftwiderstand beim Überführen des Ventils 106 zwischen seiner Schließstellung in seiner Offenstellung auf.

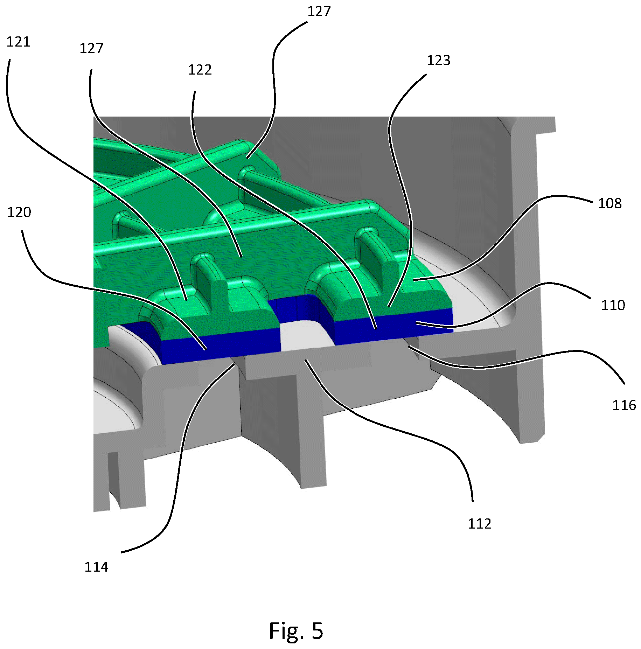

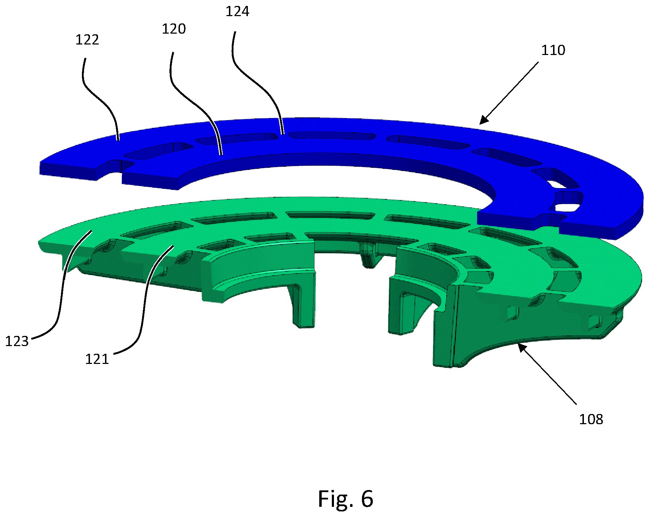

Die Figur 5 zeigt eine Schnittdarstellung durch das Ventil 106 in seiner geschlossenen Stellung, am Ventilsitz 112. Der Figur 5 ist ferner zu entnehmen, dass auch der Ventilkörper 108 erste und zweite Ringstrukturen 121, 123 aufweist. Die ersten und zweiten Ringstrukturen 121, 123 sind konzentrisch angeordnet. Die erste Ringstruktur 121 ist radial innerhalb der zweiten Ringstruktur 123 angeordnet. Auch zwischen den ersten und zweiten Ringstrukturen 121, 123 erstrecken sich Verbindungsstege 127, welche die Ringstrukturen 121, 123 in radialer Richtung verbinden. Zwischen den Streben 127 sind Langlöcher vorgesehen, welche gegenüber den Langlöchern 125 des Dichtelement 110 ausgerichtet sind, wie dies auch aus Fig. 6 hervorgeht.

### Bezugszeichenliste

- 100: Staubsaugvorrichtung
- 102: Saugaggregat
- 104: Filter
- 106: Ventil
- 108: Ventilkörper
- 110: Dichtelement
- 112: Ventilsitz
- 114, 116: Öffnung
- 120: erster Dichtring
- 121: erste Ringstruktur
- 122: zweiter Dichtring
- 123: zweite Ringstruktur
- 124: Verbindungssteg
- 125: Langloch
- 126: Durchgangsöffnung
- 127: Verbindungssteg

## Patentansprüche

1. Staubsaugvorrichtung (100), insbesondere Bausauger oder Luftreinigungsvorrichtung, wobei die Staubsaugvorrichtung (100) folgendes aufweist:
- ein Saugaggregat (102) zum Erzeugen eines Saugstroms;
- einen Filter (104), welcher derart angeordnet ist, dass der Filter (104) während des Betriebs vom Saugstrom in einer ersten Richtung durchströmt wird und dazu ausgebildet ist, Staub oder andere Verunreinigungen zumindest teilweise vom Saugstrom abzuscheiden;
- eine Abreinigungsvorrichtung zum Abreinigen des Filters (104), wobei die Abreinigungsvorrichtung ein Ventil (106) aufweist, welches zwischen einer Offenstellung, in welcher Umgebungsluft während des Betriebs den Filter (104) in einer zweiten Richtung, welche der ersten Richtung im Wesentlichen entgegengesetzt ist, durchströmt, und einer Schließstellung, überführbar ist, und wobei das Ventil (106) ein Dichtelement (110) aufweist, welches in der Schließstellung mit einem Ventilsitz in Kontakt steht,
wobei das Dichtelement (110) einen schaumförmigen, insbesondere geschlossenporigen, Elastomer, aufweist.

2. Staubsaugvorrichtung (100) nach Anspruch 1,
wobei das Dichtelement (110) Zellkautschuk, insbesondere Ethylen-Propylen-Dien-Kautschuk (EPDM) aufweist.

3. Staubsaugvorrichtung (100) nach Anspruch 2,
wobei das Dichtelement (110) ein peroxidisch vernetztes EPDM aufweist.

4. Staubsaugvorrichtung (100) nach einem der Ansprüche 1 bis 3,
wobei das Ventil (106) einen Ventilkörper (108), insbesondere ringförmigen Ventilkörper (108), mit einer ersten Seite, welche dem Ventilsitz zugewandt ist, aufweist, und wobei das Dichtelement (110), insbesondere unlösbar, an der ersten Seite des Ventilkörpers (108) angebracht ist.

5. Staubsaugvorrichtung (100) nach Anspruch 4,
wobei das Dichtelement (110) eine erste Oberfläche, welche mit der ersten Seite des Ventilkörpers (108) verbunden ist, und eine zweite Oberfläche, welche der ersten Oberfläche gegenüber liegt, aufweist, wobei die zweite Oberfläche im Wesentlichen eben ausgebildet ist.

6. Staubsaugvorrichtung (100) nach einem der Ansprüche 1 bis 5,
wobei das Dichtelement (110) im Wesentlichen ringförmig ausgebildet ist.

7. Staubsaugvorrichtung (100) nach Anspruch 6
wobei das Dichtelement (110) einen ersten Dichtring (120) aufweist, welcher in einer Ebene mit einem zweiten Dichtring (122) liegt, und wobei der erste Dichtring konzentrisch zum zweiten Dichtring angeordnet und über wenigstens einen Verbindungssteg (124) mit dem zweiten Dichtring verbunden ist.

8. Staubsaugvorrichtung (100) nach einem der Ansprüche 1 bis 7,
wobei die Abreinigungsvorrichtung einen Aktuator, insbesondere einen Elektromagnet (118), aufweist, welcher dazu ausgebildet ist, das Ventil (106) von seiner Schließstellung in seine Offenstellung zu überführen.

9. Staubsaugvorrichtung (100) nach einem der Ansprüche 1 bis 8,
wobei das Ventil (106) derart ausgebildet ist, dass das Ventil durch den Saugstrom aus der Offenstellung in seine Schließstellung zurückkehrt, wenn der Aktuator deaktiviert wird.
